# EUROPÄISCHE PATENTSCHRIFT

(11) **EP 2 240 760 B1**
(45) Veröffentlichungstag und Bekanntmachung des Hinweises auf die Patenterteilung: **02.08.2017**
(21) Anmeldenummer: 09711106.6
(22) Anmeldetag: 15.02.2009
(51) Int. Cl.: G01N 21/37

(54) **NICHTDISPERSIVER INFRAROT-GASANALYSATOR**
NON-DISPERSIVE INFRARED GAS ANALYZER
ANALYSEUR DE GAZ À INFRAROUGE NON DISPERSIF

(30) Priorität: 15.02.2008 DE 102008009189
(43) Veröffentlichungstag der Anmeldung: 20.10.2010
(73) Patentinhaber: Siemens Aktiengesellschaft, 80333 München (DE)
(72) Erfinder: BITTER, Ralf, 76139 Karlsruhe (DE); HEFFELS, Camiel, 76297 Stutensee-Büchig (DE); HÖRNER, Thomas, 76135 Karlsruhe (DE); KIMMIG, Ludwig, 76275 Ettlingen (DE); KIONKE, Martin, 76185 Karlsruhe (DE); LUDWIG, Michael, 76149 Karlsruhe (DE)
(86) Internationale Anmeldenummer: PCT/EP2009/051743
(87) Internationale Veröffentlichungsnummer: WO 2009/101197

(56) Entgegenhaltungen:
- DE-A1- 3 529 482
- DE-B- 1 109 418
- DE-B- 1 204 430

## Beschreibung

Die Erfindung betrifft einen nichtdispersiven Infrarot-(NDIR-) Gasanalysator nach dem Oberbegriff des Patentanspruchs 1.

Ein derartiger NDIR-Gasanalysator ist aus der DE 11 09 418 B bekannt.

NDIR-Gasanalysatoren sind in Einstrahl- und Zweistrahl-Ausführung bekannt. Bei den Einstrahl-Geräten wird die von dem Infrarot-Strahler erzeugte Infrarot-Strahlung nach Modulation, z. B. durch ein rotierendes Blendenrad, durch die das Gasgemisch mit der Messgaskomponente enthaltende Messküvette zu der Detektoreinrichtung geleitet, während bei Zweistrahl-Geräten die Infrarot-Strahlung in eine modulierte Messstrahlung durch die Messküvette und eine gegenphasig modulierte Vergleichsstrahlung durch eine mit einem Vergleichsgas gefüllte Vergleichsküvette aufgeteilt wird. Für die Detektoreinrichtung werden üblicherweise mit der nachzuweisenden Gaskomponente gefüllte optopneumatische Detektoren mit einer oder mehreren neben- oder hintereinander liegenden Empfängerkammern verwendet.

Bei dem aus der oben genannten DE 11 09 418 B bekannten NDIR-Gasanalysator besteht die Detektoreinrichtung aus einem optopneumatischen Detektor, dessen Gasfüllung so gewählt ist, dass er ein nur schmales, dem Resonanzgebiet der Messgaskomponente entsprechendes Absorptionsgebiet hat. Um die Messgaskomponente in Anwesenheit einer weiteren Komponente eines breiten Absorptionsgebiets zu messen, ist dem optopneumatischen Detektor ein weiterer optopneumatischer Detektor nachgeordnet, dessen Gasfüllung so gewählt ist, dass er ein breites, das schmale Absorptionsgebiet überdeckendes Absorptionsgebiet aufweist. Beide Detektoren sind hinsichtlich ihrer Ausgangssignale gegeneinander geschaltet, so dass das Ausgangssignal des nachgeordneten Detektors denjenigen Anteil im Messsignal der Detektoreinrichtung kompensiert, der von der überdeckenden Komponente des breiten Absorptionsbereichs herrührt.

Zur Gewährleistung der funktionalen Sicherheit müssen NDIR-Gasanalysatoren in der Lage sein, je nach Sicherheitsanforderungsstufe bestimmte Fehler zu diagnostizieren, um Fehlmessungen auszuschließen. Die quantitative Analyse der Komponenten eines NDIR-Gasanalysators zeigt, dass die Infrarot-Strahlungsquelle die höchste Fehlerrate aufweist. Diese Komponente unterliegt einer langsamen aber stetigen Alterung.

Bei einem aus der DE 35 29 482 A1 bekannten Zweistrahl-NDIR-Gasanalysator ist zur Überprüfung der vollen Funktionsfähigkeit des auf Null abgeglichenen Gasanalysators sowie zur Ausschaltung von durch Strahleralterung oder Fensterverschmutzung auftretenden Langzeitdriften des Nullpunkts in einer die Empfängerkammern im Mess- und Vergleichsstrahlengang verbindenden Leitung ein weiterer strömungs- oder druckempfindlicher Sensor angeordnet, der ein der Gesamtintensität der detektierten Infrarot-Strahlung proportionales weiteres Detektorsignal erzeugt. Mit diesem weiteren Signal lässt sich auch bei Null-Kompensation des Gasanalysators, wenn also das Messsignal Null ist, die Funktionsfähigkeit des Gasanalysators überprüfen. Das weitere Signal kann als Eingangsgröße zur Regelung der Infrarot-Strahlungsquelle eingesetzt werden, wobei die Strahlungsleistung so geregelt wird, dass dieses Signal stets konstant bleibt, d. h., bei Null-Kompensation hat das System immer eine konstante Empfindlichkeit, da über die Regelung der Einfluss der Strahleralterung und Schmutzablagerungen im optischen Strahlengang kompensiert wird. Damit lässt sich die sonst notwendige Kalibrierung mit Kalibriergas in bestimmten Zeitabständen vermeiden.

Bei Einstrahl-Geräten ist dagegen eine regelmäßige Kalibrierung mit Kalibriergas erforderlich, wodurch die Verfügbarkeit des Gasanalysators für Messzwecke herabgesetzt wird.

Der Erfindung liegt die Aufgabe zugrunde, mit einfachen Mitteln, und dabei insbesondere ohne Modifikation der vorhandenen Detektoreinrichtung, den Einfluss der Alterung der Strahlungsquelle und ggf. den Einfluss von Schmutzablagerungen im optischen Strahlengang ohne Unterbrechung der Messung zu erfassen.

Gemäß der Erfindung wird die Aufgabe durch den in Patentanspruch 1 angegebenen NDIR-Gasanalysator gelöst. Dazu ist im Strahlengang der Infrarot-Strahlungsquelle mindestens ein optopneumatischer Detektor angeordnet, der bei Anordnung zwischen der Infrarot-Strahlungsquelle und der Messküvette mit einem beliebigen Gas gefüllt ist, wobei im Falle der Füllung mit der Messgaskomponente die Konzentration der Messgaskomponente in dem optopneumatischen Detektor geringer als die in der Messküvette ist, und der bei Anordnung zwischen der Messküvette und der Detektoreinrichtung mit einem Gas gefüllt ist, dessen Absorptionsspektrum außerhalb der Spektren der Messgaskomponente und weiterer Quergase in dem Gasgemisch liegt, und dass eine Korrektureinrichtung zur Korrektur des Messsignals der Detektoreinrichtung mit dem von dem Detektor erzeugten Detektorsignal vorhanden ist. Soweit das Gas aus mehreren Gaskomponenten besteht, liegen im letztgenannten Fall die Absorptionsspektren aller Gaskomponenten außerhalb der Spektren der Messgaskomponente und weiterer Quergase.

Ist der optopneumatische Detektor zwischen der Infrarot-Strahlungsquelle und der Messküvette angeordnet, so ist das von ihm erzeugte Detektorsignal nur von der Strahlungsintensität der Strahlungsquelle beeinflusst. Damit ist eine permanente Überwachung der Infrarot-Strahlungsquelle auf Verschmutzung und Alterung sowie eine entsprechende Korrektur des von dem Gasanalysator gelieferten Messergebnisses möglich. Der optopneumatische Detektor kann mit einem beliebigen Gas, darunter auch der Messgaskomponente, gefüllt sein, wobei im letzteren Fall die Konzentration der Messgaskomponente geringer als die in der Messküvette sein muss, um die Vorabsorption für die eigentliche Messung möglichst gering zu halten.

Ist der optopneumatische Detektor zwischen der Messküvette und der Detektoreinrichtung angeordnet und mit einem Gas gefüllt, dessen Absorptionsspektrum außerhalb der Spektren der Messgaskomponente und ggf. weiterer Quergase des sich in der Messküvette befindenden Gasgemischs liegt, so ist das von ihm erzeugte Detektorsignal von der Strahlungsintensität der Strahlungsquelle und Verschmutzungen der Messküvette beeinflusst. Damit ist eine permanente Überwachung des Gesamt-Strahlengangs des Gasanalysators auf Verschmutzung und Alterung sowie eine entsprechende Korrektur des von dem Gasanalysator gelieferten Messergebnisses möglich.

Eine Anordnung jeweils eines optopneumatischen Detektors zwischen der Infrarot-Strahlungsquelle und der Messküvette und im Weiteren zwischen der Messküvette und der Detektoreinrichtung die Detektorsignale ermöglicht es in vorteilhafter Weise Alterungen oder Verschmutzungen der Strahlungsquelle und Verschmutzungen der Messküvette getrennt zu diagnostizieren.

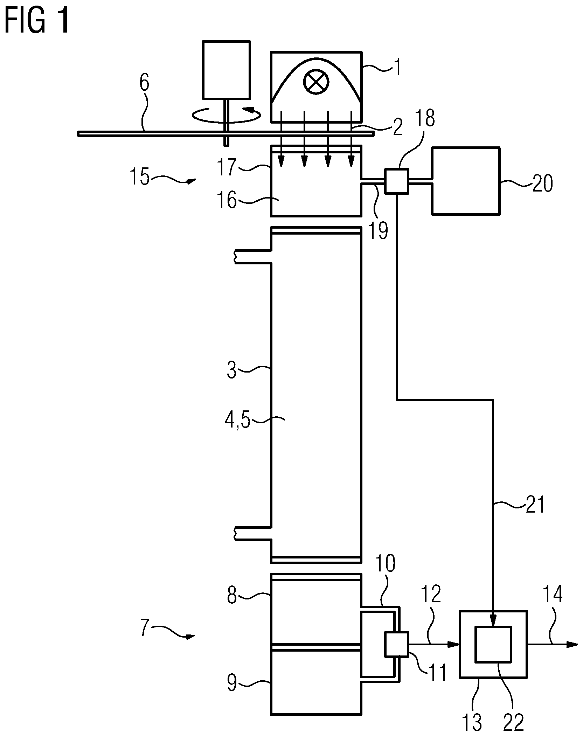

Zur weiteren Erläuterung der Erfindung wird im Folgenden auf die Figuren 1 bis 5 der Zeichnung Bezug genommen, die unterschiedliche Ausführungsbeispiele des erfindungsgemäßen NDIR-Gasanalysators zeigen.

Figur 1 zeigt einen NDIR-Gasanalysator in Einstrahl-Ausführung mit einer Infrarot-Strahlungsquelle 1, die eine Infrarot-Strahlung 2 erzeugt. Die Infrarot-Strahlung 2 durchstrahlt eine Messküvette 3, die ein Gasgemisch 4 mit einer Messgaskomponente 5 enthält, deren Konzentration zu bestimmen ist. Dabei wird die Infrarot-Strahlung 2 zuvor mittels einer zwischen der Infrarot-Strahlungsquelle 1 und der Messküvette 3 angeordneten Modulationseinrichtung 6, hier z. B. in Form eines rotierenden Blendenrads, moduliert. Nach Durchstrahlen der Messküvette 3 fällt die Infrarot-Strahlung 2 auf eine Detektoreinrichtung 7, die bei dem hier gezeigten Ausführungsbeispiel als Zweischichtempfänger mit zwei hintereinander liegenden und mit der Messgaskomponente 5 oder einem Ersatzgas gefüllten Empfängerkammern 8, 9 ausgebildet ist, welche über eine Verbindungsleitung 10 mit einem darin angeordneten druck- oder strömungsempfindlichen Sensor 11 miteinander verbunden sind. Der Sensor 11 erzeugt ein Messsignal 12, aus dem in einer Auswerteeinrichtung 13 als Messergebnis 14 die Konzentration der Messgaskomponente 5 in dem Gasgemisch 4 ermittelt wird.

Zur Ermittlung der Intensität der in die Messküvette 3 eingeleiteten Infrarot-Strahlung ist zwischen der Infrarot-Strahlungsquelle 1 (hinter der Modulationseinrichtung 6) und der Messküvette 3 ein optopneumatischer Detektor 15 in Form eines Einschichtempfängers eingefügt. Der optopneumatische Detektor 15 besteht aus einer mit einem beliebigen Gas 16 (beispielsweise auch der Messgaskomponente 5 in geringerer Konzentration als in der Messküvette 3) gefüllten Empfängerkammer 17, die über eine Verbindungsleitung 19 mit einem darin angeordneten druck- oder strömungsempfindlichen Sensor 18 mit einer Ausgleichskammer 20 außerhalb des Strahlengangs der Infrarot-Strahlung 2 verbunden ist. Der Sensor 18 erzeugt ein Detektorsignal 21, das die Intensität der in die Messküvette 3 gelangenden Infrarot-Strahlung 2 repräsentiert und mit dem innerhalb der Auswerteeinrichtung 13 in einer Korrektureinrichtung 22 das Messsignal 12 der Detektoreinrichtung 7 korrigiert wird, so dass das Messergebnis 14 von Intensitätsänderungen der Infrarot-Strahlung 2, beispielsweise aufgrund von Alterung oder Verschmutzung der Strahlungsquelle 1, unabhängig ist.

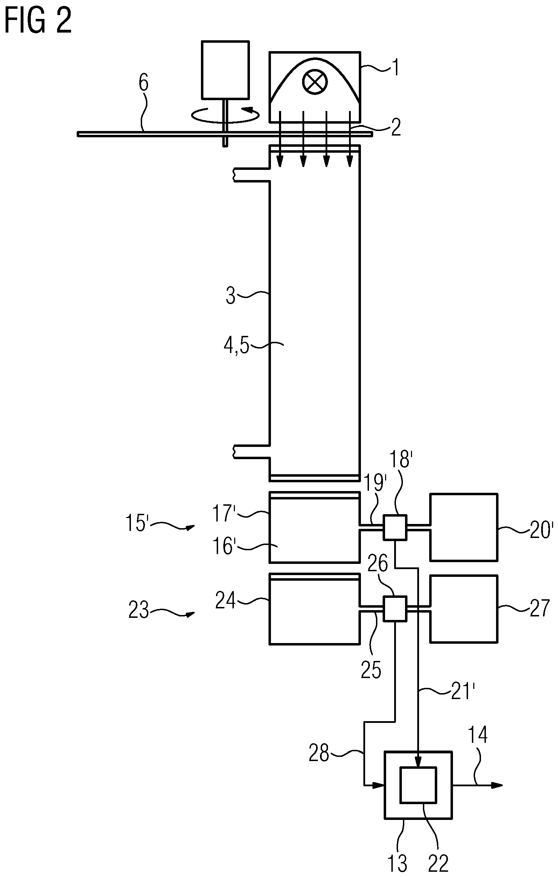

Der in Figur 2 gezeigte NDIR-Gasanalysator unterscheidet sich von dem nach Figur 1 dadurch, dass der optopneumatische Detektor 15' zwischen der Messküvette 3 und der Detektoreinrichtung 23 angeordnet ist und mit einem Gas 16' gefüllt ist, dessen Absorptionsspektrum außerhalb der Spektren der Messgaskomponente 5 und weiterer Quergase in dem zu analysierenden Gasgemisch 4 liegt. Dadurch werden Intensitätsänderungen der Infrarot-Strahlung 2 erfasst und kompensiert, die nicht nur von der Alterung oder Verschmutzung der Strahlungsquelle 1 sondern auch von Verschmutzungen der Messküvette 3 verursacht sind. Die Detektoreinrichtung 23 kann wie im Beispiel nach Figur 1 als Zweischichtempfänger oder, wie hier gezeigt, als Einschichtempfänger ausgebildet sein, bei dem eine mit der Messgaskomponente 5 oder einem Ersatzgas gefüllte Empfängerkammer 24, die über eine Verbindungsleitung 25 mit einem darin angeordneten druck- oder strömungsempfindlichen Sensor 26 mit einer Ausgleichskammer 27 außerhalb des Strahlengangs der Infrarot-Strahlung 2 verbunden ist. Umgekehrt kann auch bei dem Beispiel nach Figur 1 die dortige Detektoreinrichtung 7 als Einschichtempfänger ausgebildet sein.

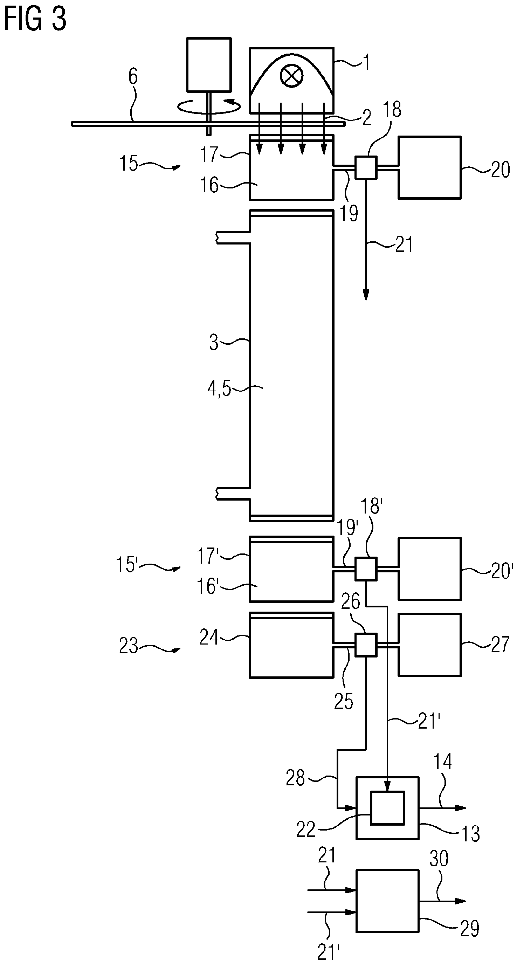

Das Ausführungsbeispiel nach Figur 3 unterscheidet sich von dem nach Figur 2 dadurch, dass zusätzlich zu dem optopneumatischen Detektor 15' zwischen der Messküvette 3 und der Detektoreinrichtung 23 auch der in Figur 1 gezeigte optopneumatische Detektor 15 zwischen der Infrarot-Strahlungsquelle 1 und der Messküvette 3 vorgesehen ist. Die Detektorsignale 21, 21' beider optopneumatischen Detektoren 15, 15' sind einer Auswerteeinrichtung 29 zugeführt, die aus beiden Detektorsignalen 21, 21' Alterungen oder Verschmutzungen der Strahlungsquelle 1 und der Messküvette 3 voneinander getrennt diagnostiziert (Diagnoseinformation 30).

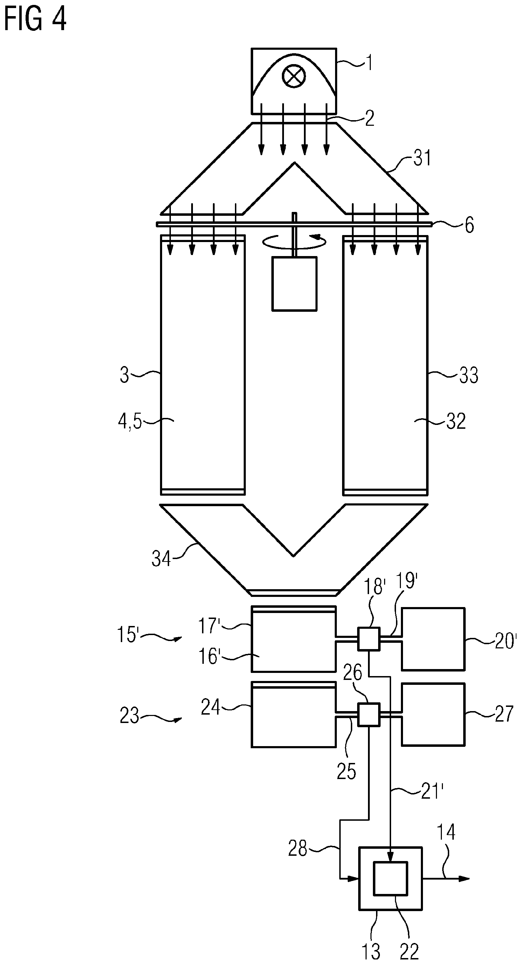

Der in Figur 4 gezeigte NDIR-Gasanalysator unterscheidet sich von dem nach Figur 2 durch einen Zweistrahl-Aufbau. Mittels eines Strahlteilers 31 wird die von dem Infrarot-Strahler 1 erzeugte Infrarot-Strahlung 2 auf einen Messstrahlengang durch die das Gasgemisch 4 mit der Messgaskomponente 5 enthaltende Messküvette 3 und einen Vergleichsstrahlengang durch eine mit einem Vergleichsgas 32 gefüllte Vergleichsküvette 33 aufgeteilt. Hinter der Messküvette 3 und der Vergleichsküvette 33 werden der Messstrahlengang und der Vergleichsstrahlengang mittels eines Strahlungssammlers 34 wieder zusammengeführt und gelangen anschließend in die unter Bezug auf

Figur 2 bereits beschriebene Anordnung des optopneumatischen Detektors 15' und der Detektoreinrichtung 23.

Bei den gezeigten Ausführungsbeispielen kommen anstelle des Zweischichtempfängers 7 oder des Einschichtempfängers 23 auch andere Detektorsysteme in Frage.

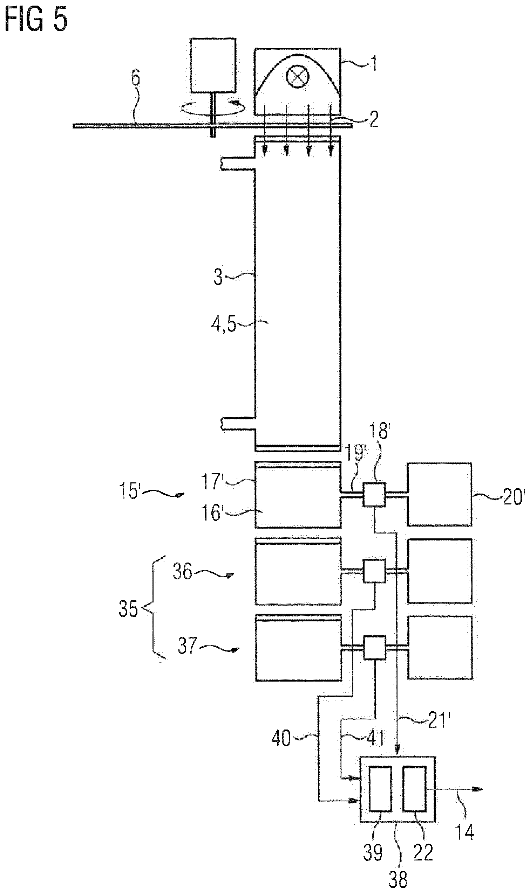

So kann entsprechend Figur 5 die Detektoreinrichtung 35 neben einem ersten, die Messgaskomponente enthaltenden Einschichtempfänger 36 mindestens einen weiteren, im Strahlengang dahinter liegenden Einschichtempfänger 37 aufweisen, der ein Quergas enthält. Die Auswerteeinrichtung 38 enthält eine entsprechend der Anzahl n der Einschichtempfänger n-dimensionale Kalibrationsmatrix 39, in der bei unterschiedlichen bekannten Konzentrationen der Messgaskomponente 5 in Anwesenheit von unterschiedlichen bekannten Quergaskonzentrationen erhaltene Messsignalwerte als n-Tupel abgespeichert sind. Beim Messen von unbekannten Konzentrationen der Messgaskomponente 5 in Anwesenheit von unbekannten Quergaskonzentrationen wird durch Vergleich der dabei erhaltenen n-Tupel von Messsignalwerten 40, 41 mit den in der Kalibrationsmatrix 39 abgespeicherten n-Tupeln von Messsignalwerten die Konzentration der Messgaskomponente 5 in dem Gasgemisch 4 ermittelt.

## Patentansprüche

1. Nichtdispersiver Infrarot-Gasanalysator zum Nachweis einer Messgaskomponente (5) in einem Gasgemisch (4), mit einer Infrarot-Strahlungsquelle (1) zur Erzeugung einer Infrarot-Strahlung (2), mit einer Modulationseinrichtung (6) zur Modulation der Infrarot-Strahlung (2), mit einer das Gasgemisch (4) enthaltenden und von der modulierten Infrarot-Strahlung (6) durchstrahlten Messküvette (3) und mit einer in Strahlungsrichtung hinter der Messküvette (3) angeordneten Detektoreinrichtung (7, 23, 35), die ein der Konzentration der Messgaskomponente (5) in dem Gasgemisch (4) entsprechendes Messsignal (12, 28, 40, 41) liefert, wobei im Strahlengang der Infrarot-Strahlungsquelle (1) mindestens ein optopneumatischer Detektor (15, 15') angeordnet ist und eine Korrektureinrichtung (22) zur Korrektur des Messsignals (12, 28, 40, 41) der Detektoreinrichtung (7, 23, 35) mit dem von dem Detektor (15, 15') erzeugten Detektorsignal (21, 21') vorhan den ist,
**dadurch gekennzeichnet,**
**dass** der mindestens eine optopneumatische Detektor (15, 15')
- bei Anordnung zwischen der Infrarot-Strahlungsquelle (1) und der Messküvette (3) mit einem beliebigen Gas (16) gefüllt ist, wobei im Falle der Füllung mit der Messgaskomponente die Konzentration der Messgaskomponente in dem optopneumatischen Detektor (15) geringer als die in der Messküvette (3) ist, und
- bei Anordnung zwischen der Messküvette (3) und der Detektoreinrichtung (7, 23, 35) mit einem Gas (16') gefüllt ist, dessen Absorptionsspektrum außerhalb der Spektren der Messgaskomponente (5) und weiterer Quergase in dem Gasgemisch (4) liegt.

2. Nichtdispersiver Infrarot-Gasanalysator nach Anspruch 1, **dadurch gekennzeichnet, dass** bei Anordnung jeweils eines optopneumatischen Detektors (15, 15') sowohl zwischen der Infrarot-Strahlungsquelle (1) und der Messküvette (3) als auch zwischen der Messküvette (3) und der Detektoreinrichtung (7, 23, 35) die Detektorsignale (21, 21') beider optopneumatischen Detektoren (15, 15') einer Auswerteeinrichtung (29) zugeführt sind, die aus beiden Detektorsignalen (21, 21') Alterungen oder Verschmutzungen der Strahlungsquelle (1) und der Messküvette (3) diagnostiziert.

## Claims

1. Non-dispersive infrared gas analyser for verifying a measuring gas component (5) in a gas mixture (4), having an infrared radiation source (1) for generating an infrared radiation (2), a modulation device (6) for modulating the infrared radiation (2), a measuring vessel (3) containing the gas mixture (4) and irradiated by the modulated infrared radiation (6) and a detector device (7, 23, 35) arranged behind the measuring vessel (3) in the radiation direction, said detector device providing a measuring signal (12, 28, 40, 41) which corresponds to the concentration of the measuring gas component (5) in the gas mixture (4), wherein at least one optopneumatic detector (15, 15') is arranged in the radiation path of the infrared radiation source (1), and a correction device (22) is present for correcting the measuring signal (12, 28, 40, 41) of the detector device (7, 23, 35) with the detector signal (21, 21') generated by the detector (15, 15'),
**characterised in that**
the at least one optoneumatic detector (15, 15')
- when arranged between the infrared radiation source (1) and the measuring vessel (3), is filled with any gas (16) whereby, when filled with the measuring gas component, the concentration of the measuring gas component in the optopneumatic detector (15) is lower than that in the measuring vessel (3), and
- when arranged between the measuring vessel (3) and the detector device (7, 23, 35), is filled with a gas (16') the absorption spectrum of which lies outside of the spectra of the measuring gas component (5) and further transverse gases in the gas mixture (4).

2. Non-dispersive infrared gas analyser according to claim 1, **characterised in that**, when the at least one optopneumatic detector (15, 15') is arranged both between the infrared radiation source (1) and the measuring vessel (3) and also between the measuring vessel (3) and the detector device (7, 23, 35), the detector signals (21, 21') of both optopneumatic detectors (15, 15') are fed to an evaluation device (29), which diagnoses ageings or dirt in the radiation source (1) and the measuring vessel (3) from the two detector signals (21, 21').

## Revendications

1. Analyseur de gaz à infrarouge non dispersif pour la détection d'un constituant ( 5 ) gazeux à mesurer d'un mélange ( 4 ) gazeux, comprenant une source ( 1 ) de rayonnement infrarouge pour produire un rayonnement ( 2 ) infrarouge, comprenant un dispositif ( 6 ) de modulation pour moduler le rayonnement ( 2 ) infrarouge, comprenant une cuvette ( 3 ) de mesure contenant le mélange ( 4 ) gazeux et traversée par le rayonnement ( 6 ) infrarouge modulé et comprenant un dispositif ( 7, 23, 35 ) à détecteur monté, dans le sens du rayonnement, derrière la cuvette ( 3 ) de mesure et fournissant un signal ( 12, 28, 40, 41 ) de mesure correspondant à la concentration du constituant ( 5 ) gazeux à mesurer du mélange ( 4 ) gazeux, dans lequel, dans le trajet de rayonnement de la source ( 1 ) de rayonnement infrarouge est monté au moins un détecteur ( 15, 15' ) optopneumatique et il y a un dispositif ( 22 ) de correction pour corriger le signal ( 12, 28, 40, 41 ) de mesure du dispositif ( 7, 23, 35 ) à détecteur par le signal ( 21, 21' ) de détecteur produit par le détecteur ( 15, 15' ),
**caractérisé**
**en ce que** le au moins un détecteur ( 15, 15' ) optopneumatique
- dans un agencement entre la source ( 1 ) de rayonnement infrarouge et la cuvette ( 3 ) de mesure, est rempli d'un gaz ( 16 ) quelconque, dans lequel, dans le cas du remplissage par le constituant gazeux à mesurer, la concentration du constituant gazeux à mesurer dans le détecteur ( 15 ) optopneumatique est plus petite que celle dans la cuvette ( 3 ) de mesure, et
- dans un agencement entre la cuvette ( 3 ) de mesure et le dispositif ( 7, 23, 35 ) à détecteur, est rempli d'un gaz ( 16' ) dont le spectre d'absorption est en dehors des spectres du constituant ( 5 ) gazeux à mesurer et d'autres gaz secondaires du mélange ( 4 ) gazeux.

2. Analyseur de gaz à infrarouge non dispersif suivant la revendication 1,
**caractérisé en ce que**, dans un agencement d'un détecteur ( 15, 15' ) optopneumatique, tant entre la source ( 1 ) de rayonnement à infrarouge et la cuvette ( 3 ) de mesure, qu'également entre la cuvette ( 3 ) de mesure et le dispositif ( 7, 23, 35 ) à détecteur, les signaux ( 21, 21' ) de détecteur des deux détecteurs ( 15, 15' ) optopneumatiques sont envoyés à un dispositif ( 29 ) d'exploitation, qui, à partir des deux signaux ( 21, 21' ) de détecteur, diagnostique des vieillissements ou des encrassements de la source ( 1 ) de rayonnement et de la cuvette ( 3 ) de mesure.
